# EUROPEAN PATENT APPLICATION

(11) **EP 2 611 139 A2**
(43) Date of publication of application: **03.07.2013**
(21) Application number: 12173946.0
(22) Date of filing: 27.06.2012
(51) Int. Cl.: H04N 5/232

(54) **Display apparatus and control method thereof**

(30) Priority: 30.12.2011 KR 20110147746
(71) Applicant: Samsung Electronics Co., Ltd., Suwon-si, Gyeonggi-do, 443-742 (KR)
(72) Inventor: Kim, Seok-hyun, Korea (KR); Yoon, Yeo-ri, Korea (KR); Lee, Chang-soo, Korea (KR)
(74) Representative: Misselbrook, Paul

(57) **Abstract**

A display apparatus includes: an image receiver which receives an image signal; an image processor which processes the image signal received by the image receiver according to a preset image processing operation; a display unit which displays thereon an image based on the image signal that is processed by the image processor; a camera which captures a predetermined subject an generates a first image; and a controller which determines the subject from the first image generated by the camera, generates a second image including the subject by automatically adjusting the first image according to a preset image standard by focusing on the determined subject, and displays the second image on the display unit.

## Description

### BACKGROUND

### 1. Field

Apparatuses and methods consistent with the exemplary embodiments relate to an apparatus and a control method thereof which processes an image signal, and more particularly, to an apparatus and a control method thereof which processes an image to focus on a predetermined subject.

### 2. Description of the Related Art

A display apparatus processes an image signal/image data which is input by an external image supply source or stored therein and displays an image on a display unit with the processed image signal/image data. A display apparatus which is provided to a general user includes a television (TV), a monitor, etc. For example, a TV as a display apparatus provides a user with an image of a broadcasting channel desired by a user by processing a broadcasting signal transmitted from the outside such as tuning or decoding operation.

With the development of technology and to meet a user's demand, the display apparatus may process various data/information/application for a user beyond simply processing an image based on an image signal transmitted by an image supply source to display the image. As such, additional functionality is provided depending on a use pattern of a user using the display apparatus. Thus, the display apparatus may form a profile for each user and may provide functionality to fit the unique settings of each user profile.

The user profile includes information to identify each of a plurality of user profiles (for example: user identification data, personal information, snap-shot images, etc.

### SUMMARY

Accordingly, one or more exemplary embodiments provide a display apparatus including: an image receiver which receives an image signal; an image processor which processes the image signal received by the image receiver according to a preset image processing operation; a display unit which displays thereon an image based on the image signal that is processed by the image processor; a camera which captures a predetermined subject and generates a first image; and a controller which determines the subject from the first image generated by the camera, generates a second image including the subject by automatically adjusting the first image according to a preset image standard by focusing on the determined subject, and displays the second image on the display unit.

The subject may include a user's face, and the second image may include a snap-shot image associated with a user profile used by the display apparatus.

The preset image standard may include a horizontal length and a vertical length of the second image and a ratio of an area of the subject occupying the second image to a total area of the second image.

The controller may generate the second image by adjusting a magnification of the first image to conform to the ratio of the image standard, and may cropping the subject corresponding to the horizontal length and the vertical length of the image standard.

The controller may display on the display unit a user interface (UI) image that is provided to select one of a plurality of subjects within the first image if it is determined that the plurality of subjects is provided within the first image, and may generate the second image of one of the subjects selected through the UI image.

The controller may a user interface for the user to select whether or not to store the second image, and may store the displayed second image in the display apparatus of the user selects to store the second image.

Another aspect of the present disclosure may be achieved by providing a control method of a display apparatus including: capturing a predetermined subject by a camera of the display apparatus and generating a first image; determining the subject from the first image generated by the camera and generating a second image including the subject by automatically adjusting the first image according to a preset image standard by focusing on the determined subject; and displaying the second image.

The subject may include a user's face, and the second image may include a snap-shot image associated with a user profile used by the display apparatus.

The preset image standard may include a horizontal length and a vertical length of the second image and a ratio of an area of the subject occupying the second image to a total area of the second image.

The generating the second image may include adjusting a magnification of the first image to conform to the ratio of the image standard; and cropping the first image to conform to the horizontal length and a vertical length of the image standard.

The generating the second image may include displaying a UI image which is provided to select one of a plurality of subjects within the first image if it is determined that the plurality of subjects is provided in the first image; and generating the second image of one of the subjects selected through the UI image.

The displaying the second image may include displaying a user interface for the user to select whether or not to store the second image, and storing the displayed second image in the display apparatus of the user selects to store the second image.

Another aspect of the present disclosure may be achieved by providing a computing apparatus including an image processor which outputs an image signal, a storage unit which stores a user profile including user-adjustable settings and an associated user profile image (which includes an image of the user and has a predetermined width, a predetermined height, and a predetermined ratio of the size of the image of the user to the predetermined area), a controller which receives a first image including an image of the user and converts the first image into the user profile image by determining a location of the user within the first image and scaling and cropping the first image to conform to the predetermined width, the predetermined height, and the predetermined ratio.

The image of the user may include a face and the scaling and cropping of the first image may further include scaling and cropping the first image so the face in the user profile image is centered relative to the predetermined with of the user profile image.

The scaling and cropping of the first image may further include scaling and cropping the first image so the height of the face is a predetermined percentage of the predetermined height of the user profile image.

The computing apparatus may further include a display which displays the image signal output by the image processor.

The computing apparatus may further include a user input unit which receives input from the user and outputs a signal based on the user input to the controller.

The first image may include a plurality of individuals and the controller may determine the location of the user by outputting an image including the first image to the display and determine the location of the user based on input received through the user input unit.

The controller may determine whether to associate the user profile image with the user profile by outputting an image including the user profile image to the display and determine whether to associate the user profile image with the user profile based on input received through the user input unit.

The computing apparatus may further include a camera which captures the first image and outputs the first image to the controller.

The computing apparatus may further include an image receiver which receives an external image signal and outputs the external image signal to the image processor.

### BRIEF DESCRIPTION OF THE DRAWINGS

The above and/or other aspects will become apparent and more readily appreciated from the following description of exemplary embodiments, taken in conjunction with the accompanying drawings, in which:

FIG. 1 illustrates an example of a display apparatus according to exemplary embodiments of the present disclosure;

FIG. 2 is a block diagram of the display apparatus in FIG. 1;

FIG. 3 illustrates an example of a snap shot image which is used in the display apparatus in FIG. 1;

FIG. 4 illustrates an example of a basic image that is primarily captured by a camera of the display apparatus in FIG. 1;

FIG. 5 illustrates an example of a user interface (UI) image which is used to select storage/non-storage of the snap shot image generated by the display apparatus in FIG. 1;

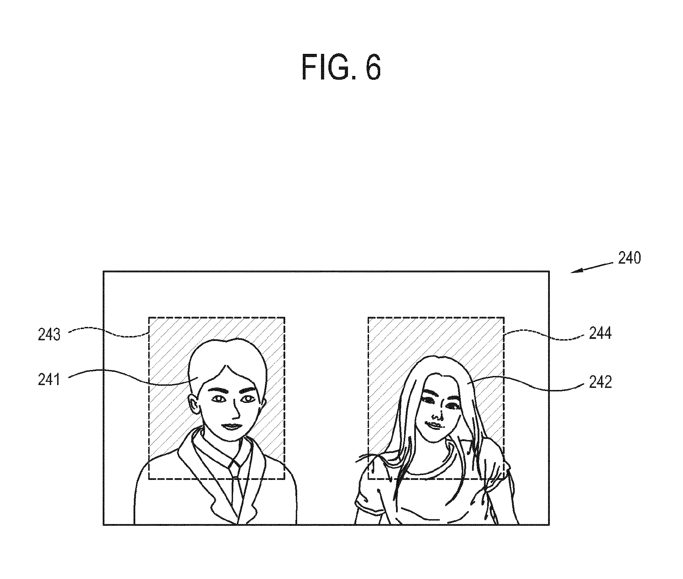

FIG. 6 illustrates an example of the basic image that is primarily captured by the camera of the display apparatus in FIG. 1 and includes a plurality of subjects; and

FIG. 7 is a control flowchart of a control method of the display apparatus in FIG. 1.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

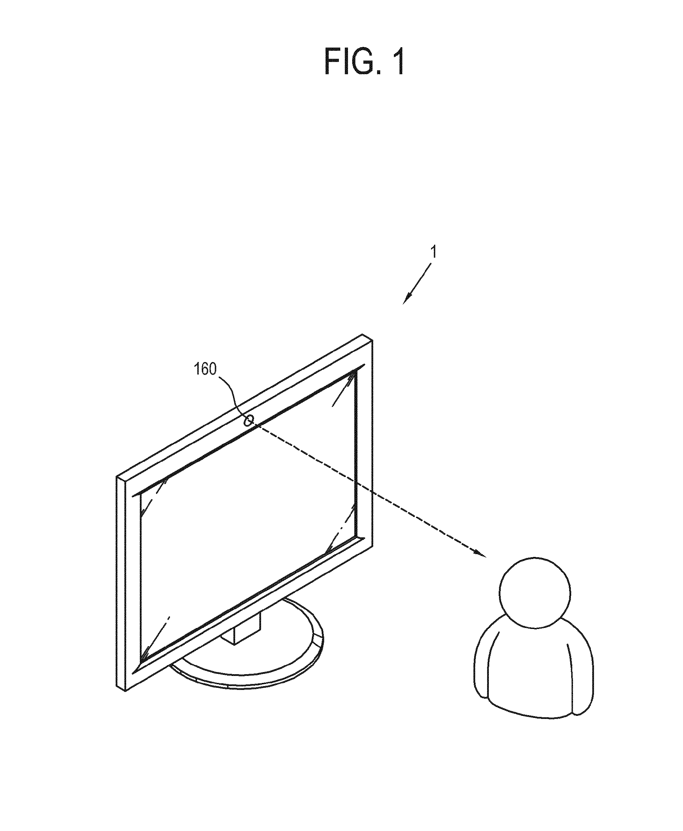

FIG. 1 illustrates an example of a display apparatus 1 according to exemplary embodiments of the present disclosure.

As shown therein, the display apparatus 1 according to exemplary embodiments processes an image signal according to a preset image processing operation and displays an image with the processed image. The display apparatus 1 includes a TV which displays an image based on image signal/image data/image information which are supplied by an external image supply source (not shown) or stored therein.

However, the spirit of the present disclosure may apply to other different embodiments. For example, display apparatus 1 may be a monitor, a portable multimedia player (PMP), a mobile phone, etc. As will be discussed below, display apparatus 1 can also be embodied in a computing apparatus that does not include a display. That is, exemplary embodiments which will be described hereinafter are examples to which the present disclosure applies in various manners according to embodiments of a system, but do not limit the spirit of the present disclosure.

The display apparatus 1 may display various types of images. For example, the display apparatus 1 may display video, still images, applications, on-screen display (OSD), a graphic user interface (GUI) to perform various control operations, etc.

The display apparatus 1 may include various additional functions as well as displaying an image. According to the present exemplary embodiment, the display apparatus 1 includes a camera 160 which captures a predetermined subject. The camera 160 captures various subjects provided in a predetermined direction, (for example, in front of the display apparatus 1) and generates an image of the captured subject.

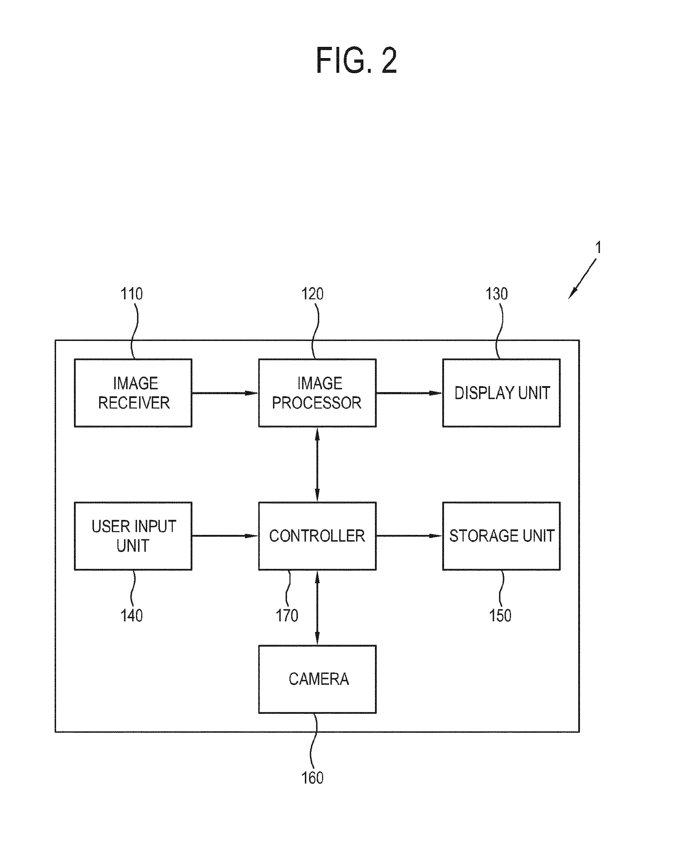

Hereinafter, detailed configurations of the display apparatus 1 will be described with reference to FIG. 2. FIG. 2 is a control block diagram of the display apparatus 1.

As shown therein, the display apparatus 1 includes an image receiver 110 to receive an image signal; an image processor 120 to process the image signal received by the image receiver 110; a display unit 130 to display thereon an image with the image signal processed by the image processor; a user input unit 140 to output a preset control command according to a user's manipulation; a storage unit 150 to store data; and a controller 170 to control operations of elements of the display apparatus 1.

The image receiver 110 transmits to the image processor 120 an image signal that is supplied by at least one image supply source (not shown) in wired/wireless manner, and varies depending on standards of a received image signal or embodiment of the image supply source and the display apparatus 1. For example, the image receiver 110 may receive a radio frequency (RF) signal, or signals/data according to high definition multimedia interface (HDMI), DisplayPort, IEEE 1384 ("FireWire"), universal serial bus (USB), component video, composite video, S-Video, Video Graphics Array (VGA), Digital Visual Interface (DVI), etc. The image receiver 110 may include a tuner to tune an RF signal in the case of reception of the RF signal.

The image processor 120 processes an image signal transmitted by the image receiver 110 according to various preset image processing operations. The image processor 120 outputs the processed image signal to the display unit 130 to display an image on the display unit 130 based on the image signal.

The image processing operation performed by the image processor 120 include a demultiplexing operation to divide a predetermined signal into signals according to properties, a decoding operation corresponding to an image format of an image signal, a de-interlacing operation to convert an image signal from interlace type into a progressive type, a noise reduction to improve the quality of an image, a detail enhancement, a conversion of a frame refresh rate, etc.

The image processor 120 includes an image processing board (not shown) mounted in a printed circuit board (not shown) with electronic parts including various chipsets (not shown).

The display unit 130 displays an image thereon based on an image signal which is output by the image processor 120. The display unit 130 may be a liquid crystal display, a plasma display, a light-emitting diode display, an organic light-emitting diode display, a surface-conduction electron-emitter, a carbon nano-tube display, a nano-crystal display, etc.

The display unit 130 may further include elements depending on its embodiment type. For example, if the display unit 130 is a liquid crystal type display, it includes a liquid crystal display (LCD) panel (not shown), a backlight unit (not shown) to emit light to the LCD panel, and a panel driving substrate (not shown) to drive the LCD panel.

The user input unit 140 transmits to the controller 170 various preset control commands or other information by a user's manipulation and input. The user input unit 140 includes a menu key, an input panel, etc. The input apparatus may be part of the display apparatus 1 or may be a remote device (for instance, a remote control, keyboard, mouse, touchpad, etc.) which is separated from the display apparatus 1.

The user input unit 140 may be integrally formed in the display unit 130. That is, if the display unit 130 includes a touch screen, a user may transmit a preset command to the controller 170 through an input menu (not shown) displayed on the display unit 130.

The storage unit 150 stores data by a control of the controller 170. The storage unit 150 may include volatile or non-volatile memory, such as a flash memory or a hard disc drive. The storage unit 150 is accessed by the controller 170, and the controller 170 may read, record, modify, delete, / and/or renew the data stored in the storage unit 150.

The camera 160 takes a photograph of or captures various subjects provided in a predetermined direction based on the display apparatus 1 (for example, in front of the display apparatus 1). The camera 160 generates a video or a still image of the subject. The camera 160 transmits to the controller 170 the video/image of the subject generated as described above. To do the foregoing, the camera 160 may include a charge coupled device (CCD) or other device to capture the subject.

The controller 170 performs a control operation for various elements of the display apparatus 1. For example, the controller 170 controls the image receiver 110 to receive an image signal, controls the image processor 120 to process an image, and controls the user input unit 140 to respond to a command input through the user input unit 140 to thereby control overall operations of the display apparatus 1.

The controller 170 may control various settings of the display apparatus 1 based on a user profile stored in the storage unit 150. For example, the user profile may include image brightness settings, audio output level settings, a preference list for broadcasting channels, an identification of whether the user is an adult, and other settings for other functions of the display apparatus 1. If the user profile is selected through the user input unit 140, the controller 170 controls the settings of the display apparatus 1 based on the settings information stored corresponding to the user profile.

The user profile includes identification information of a user, which may include ID information, personal information, a snap-shot image of the user, etc.

A user's snap-shot image is provided according to a preset image standard, and may be used as identification information of the user profile. The image standard may be set in consideration of use environment such as a device or network provided for a user. The image standard may be stored in the display apparatus 1 during a manufacturing process of the display apparatus 1, may be transmitted to the display apparatus 1 through an external network, or may be set or adjusted by the user.

The image processor 120, the storage unit 150, and the controller 170 of display apparatus 1 may alternatively be embodied in a computing apparatus without an integrated user input unit, camera, display unit, or image receiver. In such an instance, the controller 170 and the image processor 120 may output image signals to an external display unit, etc. The controller 170 may receive signals from an external user input unit, an external image receiver, an external camera, etc.

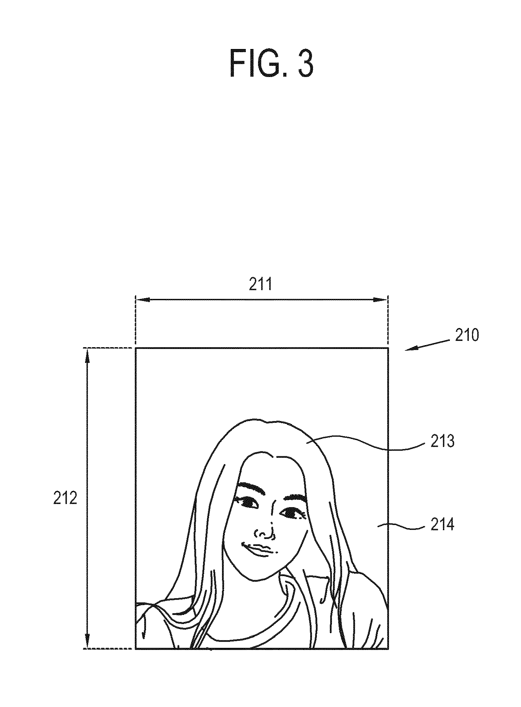

Hereinafter, an example of the image standard of the snap-shot image 210 will be described with reference to FIG. 3. FIG. 3 illustrates an example of the snap-shot image 210.

As shown therein, the snap-shot image 210 of a user used for the user profile may be formed according to two parameters of size and ratio.

The snap-shot image 210 has a preset horizontal length 211 (i.e. a predetermined width) and a preset vertical length 212 (i.e. a predetermined height), and the horizontal length 211 multiplied by the vertical length 212 equals the area 214 (i.e. a predetermined area). If the subject 213 is determined to be a user's face or bust, the snap-shot image 210 is provided so that a ratio of the area 214 with respect to the subject 213 has a particular value.

The snap-shot image 210 is provided according to the predetermined standard, and may be efficiently used as identification information of the user profile.

The snap-shot image 210 may be input from the outside to the display apparatus 1, or captured and generated by the camera 160 of the display apparatus 1.

However, in the latter case, due to limitations in installation environment, a user may not easily place the subject in the center of the image captured primarily by the camera 160. Also, modifying/editing the primarily captured image according to the image standard as described above may not be easy even by a user's manipulation performed through the user input unit 140.

According to the present exemplary embodiment, the controller 170 determines the subject from the first image that is primarily generated and captured by the camera 160, and automatically adjusts the first image according to the preset image standard by focusing on the determined subject to thereby generate a second image including the subject, i.e., the snap-shot image 210. The controller 170 displays the generated snap-shot image on the display unit 130 and allows a user to select to store the snap-shot image 210 in the storage unit 150.

In the use environment for the camera 160 installed in the display apparatus 1, the snap-shot image of the subject may be easily generated, regardless of the location of the subject.

Hereinafter, a method of generating and displaying the snap-shot image by the controller 170 according to exemplary embodiments will be described.

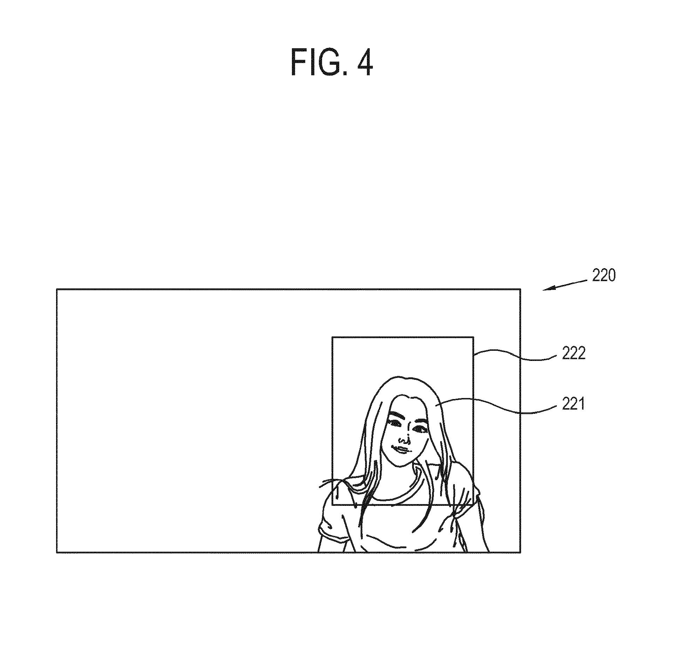

FIG. 4 illustrates an example of a basic image 220 which is primarily captured by the camera 160.

As shown therein, the camera 160 primarily captures the subject 221 provided in front thereof, generates the basic image 220 of the captured subject 221 and transmits the basic image 220 to the controller 170. The basic image 220 may include a still image extracted from video images if the camera 160 is embodied to capture video images.

The controller 170 determines the location of the subject 221 and the area occupied by the subject 221 in the basic image 220.

The method of determining the subject 221 in the basic image 220 may employ various technologies, which do not limit the spirit of the present disclosure. For example, according to object tracking algorithm, the shape of the subject 221 may be determined within the basic image 220. The object tracking algorithm is an example of various algorithms relating to recognition of a shape in an image.

If the subject 221 is determined, the controller 170 focuses the subject 221, and adjusts the basic image 220 according to the preset image standard based on the subject 221.

For example, if the subject 221 includes a user's face, the controller 170 places a frame 222 including horizontal and vertical widths according to a particular image standard centering on the user's face on the basic image 220. The controller 170 enlarges or reduces the subject 221 to comply with the magnification of the particular image standard within the frame 222.

The controller 170 crops the basic image 220 centering on the subject 221 along the frame 222 to thereby generate a snap-shot image.

The operation of the controller 170 as described above may be automatically performed without a user's manipulation command input through the user input unit 140.

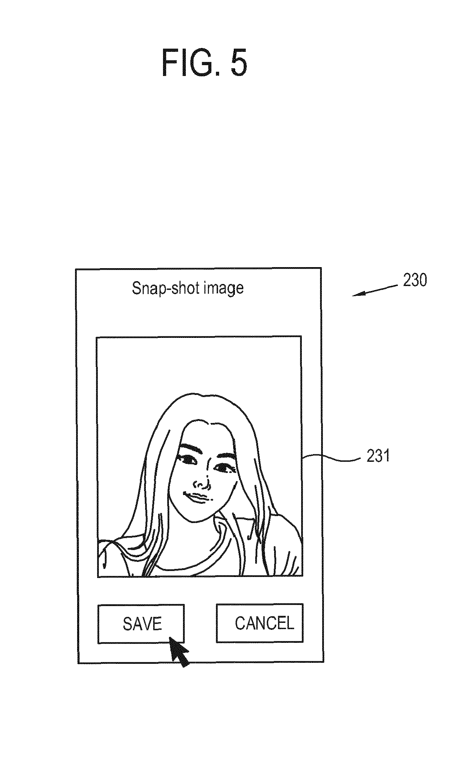

FIG. 5 illustrates an example of a user interface (UI) image 230 which may be used to select storage/non-storage of a snap-shot image 231 generated by the method described in relation to FIG. 4.

As shown therein, if the snap-shot image 231 is generated, the controller 170 displays the UI image 230 which is provided for a user to select storage/non-storage of the generated snap-shot image 231. The UI image 230 includes the snap-shot image, and a user may select whether or not to store the snap-shot image 231 through the UI image 230.

If the storage of the snap-shot image 231 is selected through the UI image 230, the controller 170 stores the snap-shot image 231 in the storage unit 150.

If the non-storage of the snap-shot image 231 is selected, the controller 170 deletes the snap-shot image 231. In this case, the controller 170 may generate a new snap-shot image according to a new preset algorithm from the stored basic image 220 (refer to FIG. 4) or end the process of generating the snap-shot image.

As described above, according to exemplary embodiments, the snap-shot image of the subject may be easily generated and displayed by the camera 160 installed in or connected to the display apparatus 1.

In the foregoing exemplary embodiments, the case where only a single subject 221 is included in the basic image 220 has been described (refer to FIG. 4). However, a basic image 240 which is primarily captured by the camera 160 may include a plurality of subjects 241 and 242.

In this case, the controller 170 displays on the display unit 130 a UI image provided to select one of the plurality of subjects 241 and 242 within the basic image 240. Such exemplary embodiments of the UI image may include the controller 170 which displays the basic image 240 in the display apparatus 1 and displays highlighted frames 243 and 244 representing the selected subjects 241 and 242.

The controller 170 generates a snap-shot image of the selected subjects 241 and 242 within the UI image. The details will be omitted since the foregoing exemplary embodiment may apply.

In exemplary embodiments, selection of one of the plurality of subjects 241 and 242 has been described. However, at least two of the plurality of subjects 241 and 242 may be also selected. In this case, the controller 170 generates the snap-shot of the subjects 241 and 242.

Without the selection process for the subjects 241 and 242 through the UI image, the controller 170 may generate the snap-shot image by automatically selecting one of the subjects 241 and 242 according to a preset condition. The preset condition may be amended in design in various ways, but not limited to a particular condition. For example, the controller 170 may select the subjects 241 and 242 which are closest to the camera 160 as determined.

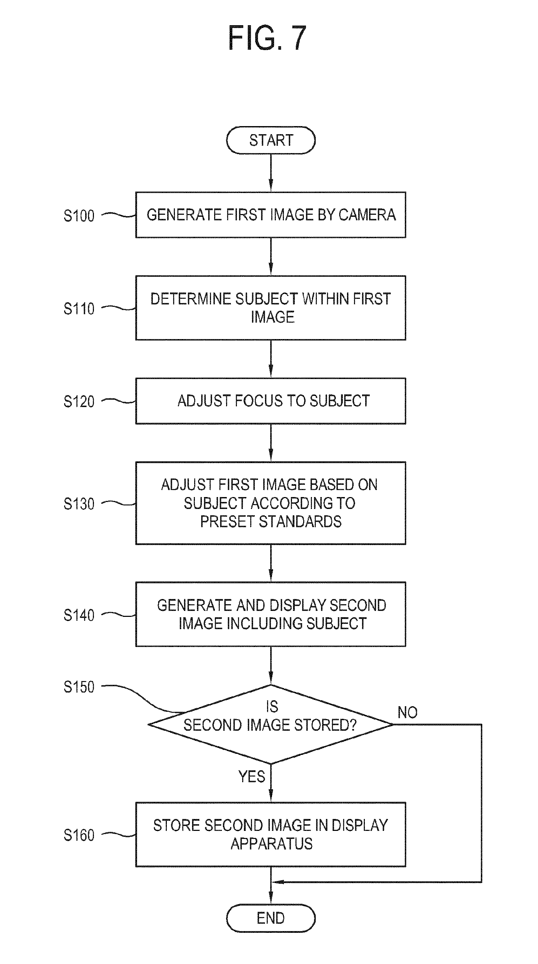

Hereinafter, the control method of the display apparatus 1 according to the present exemplary embodiment will be described with reference to FIG. 7. FIG. 7 is a control flowchart of the control process of the display apparatus 1.

As shown therein, the first image of the subject is generated by the camera 160 (S100). The controller 170 determines the subject within the first image (S110), and adjusts the focus to the determined subject (S120).

The controller 170 adjusts the first image according to the preset image standard based on the subject (S130). The adjustment of the first image includes adjustment of magnification of the subject (i.e. scaling) or cropping of the first image in preset horizontal and vertical widths centering on the subject as described above.

The controller 170 generates the second image including the subject in the method described above and displays the generated second image (S140).

Upon receiving a command to store the displayed second image (S150), the controller 170 stores the second image in the display apparatus 1 (S160).

The method described above with reference to FIG. 7 can alternatively be performed by a computing apparatus without an integrated user input unit, camera, display unit, or image receiver. In such an instance, the controller 170 may output images to an external display unit and may receive signals from an external user input unit, an external image receiver, an external camera, etc.

Although a few exemplary embodiments have been shown and described, it will be appreciated by those skilled in the art that changes may be made in these exemplary embodiments without departing from the principles and spirit of the invention, the range of which is defined in the appended claims and their equivalents.

## Claims

1. A display apparatus comprising:
an image receiver which receives an image signal;
an image processor which processes the image signal received by the image receiver according to a preset image processing operation;
a display unit which displays thereon an image based on the image signal that is processed by the image processor;
a camera which captures a predetermined subject and generates a first image; and
a controller which determines the subject from the first image generated by the camera, generates a second image comprising the subject by automatically adjusting the first image according to a preset image standard by focusing on the determined subject, and displays the second image on the display unit.

2. The display apparatus according to claim 1, wherein the subject comprises a user's face, and the second image comprises a snap-shot image associated with a user profile used by the display apparatus.

3. The display apparatus according to claim 1, wherein the preset image standard comprises a horizontal length and a vertical length of the second image and a ratio of an area of the subject occupying the second image to a total area of the second image.

4. The display apparatus according to claim 3, wherein the controller generates the second image by adjusting a magnification of the first image to conform to the ratio of the image standard, and cropping the first image to conform to the horizontal length and the vertical length of the image standard.

5. The display apparatus according to claim 1, wherein the controller displays on the display unit a user interface (UI) image that is provided to select one of a plurality of subjects within the first image if it is determined that the plurality of subjects is provided within the first image, and generates the second image of one of the subjects selected through the UI image.

6. The display apparatus according to claim 1, wherein the controller displays on the display unit a user interface for the user to select whether or not to store the second image, and stores the displayed second image in the display apparatus if the user selects to store the second image.

7. A control method of a display apparatus comprising:
capturing a predetermined subject by a camera of the display apparatus and generating a first image;
determining the subject from the first image generated by the camera and generating a second image comprising the subject by automatically adjusting the first image according to a preset image standard by focusing on the determined subject; and
displaying the second image.

8. The control method according to claim 7, wherein the subject comprises a user's face, and the second image comprises a snap-shot image associated with a user profile used by the display apparatus.

9. The control method according to claim 7, wherein the preset image standard comprises a horizontal length and a vertical length of the second image and a ratio of an area of the subject occupying the second image to a total area of the second image.

10. The control method according to claim 9, wherein the generating the second image comprises adjusting a magnification of the first image to conform to the ratio of the image standard; and
cropping the first image to conform to the horizontal length and a vertical length of the image standard.

11. The control method according to claim 7, wherein the generating the second image comprises displaying a UI image which is provided to select one of a plurality of subjects within the first image if it is determined that the plurality of subjects is provided in the first image; and
generating the second image of one of the subjects selected through the UI image.

12. The control method according to claim 7, wherein the displaying the second image comprises displaying a user interface which is provided to select whether or not to store the second image; and
storing in the display apparatus the displayed second image if the user selects to store the second image.
